# EUROPÄISCHE PATENTSCHRIFT

(11) **EP 3 961 318 B1**
(45) Veröffentlichungstag und Bekanntmachung des Hinweises auf die Patenterteilung: **30.08.2023**
(21) Anmeldenummer: 21189482.9
(22) Anmeldetag: 03.08.2021
(51) Int. Cl.: G05B 19/042

(54) **VERFAHREN ZUR KONFIGURATION EINER MODULAREN SICHERHEITSSCHALTVORRICHTUNG**
METHOD FOR CONFIGURING A MODULAR SAFETY SWITCHING DEVICE
PROCÉDÉ DE CONFIGURATION D'UN DISPOSITIF MODULAIRE DE COMMUTATION DE SÉCURITÉ

(30) Priorität: 01.09.2020 DE 102020122874
(43) Veröffentlichungstag der Anmeldung: 02.03.2022
(73) Patentinhaber: Pilz GmbH & Co. KG, 73760 Ostfildern (DE)
(72) Erfinder: Bauknecht, Jochen, 73760 Ostfildern (DE); Rotzinger, Florian, 73760 Ostfildern (DE)
(74) Vertreter: Schäperklaus, Jochen

(56) Entgegenhaltungen:
- EP-B1- 1 936 457
- DE-B4-102011 004 312
- US-A1- 2009 077 270

## Beschreibung

Die vorliegende Erfindung betrifft ein Verfahren zur Konfiguration einer modularen Sicherheitsschaltvorrichtung.

Modulare Sicherheitsschaltvorrichtungen sind aus dem Stand der Technik in unterschiedlichen Ausführungsformen bereits bekannt. Sie dienen insbesondere dem Zweck, technische Anlagen oder Maschinen beim Auftreten einer Gefahrensituation sicher in einen für Menschen ungefährlichen Zustand zu überführen. Zu diesem Zweck werden eingangsseitig entsprechende Signale von Signalgebern, bei denen es sich zum Beispiel um Not-Aus-Schalter, Not-Halt-Schalter, Lichtgitter, Lichtvorhänge, Trittmatten, Schutztürpositionsschalter, 3D-Laserscanner etc. handeln kann, empfangen und sicher ausgewertet. Ausgangsseitig werden ein oder mehrere sichere Ausgangskontakte eines Ausgangskreises angesteuert. Über diese Ausgangskontakte werden beim Auftreten einer Gefahrensituation Aktoren, wie zum Beispiel Schütze, Ventile etc., derart angesteuert, dass eine an diese angeschlossene Maschine oder technische Anlage in einen für Menschen ungefährlichen Zustand überführt werden kann.

Derartige Sicherheitsschaltvorrichtungen umfassen mehrere Elektronikmodule, die in zumindest einer Modulreihe angeordnet sind und bestimmte Funktionalitäten aufweisen. Der modulare Aufbau einer Sicherheitsschaltvorrichtung schafft die Möglichkeit einer anwendungsspezifischen Konfiguration, indem mehrere Elektronikmodule individuell zusammengestellt, elektrisch miteinander verbunden und so konfiguriert werden, dass sie der modularen Sicherheitsschaltvorrichtung gemeinsam die gewünschten Sicherheitsfunktionen zur Verfügung stellen. Beispiele für Elektronikmodule, aus denen modulare Sicherheitsschaltvorrichtungen mit ganz unterschiedlichen Sicherheitsfunktionen aufgebaut werden können, sind unter anderem Eingangsmodule, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule, die Ausgangssignale an einen oder mehrere daran angeschlossene Aktoren ausgeben können, kombinierte Eingangs- und Ausgangsmodule (so genannte I/O-Module), Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc..

Bei der Konfiguration einer modularen Sicherheitsschaltvorrichtung werden die Elektronikmodule in der zumindest einen Modulreihe aneinandergereiht und insbesondere durch die Vornahme von Einstellungen an Drehschaltern, wie zum Beispiel Rastpotentiometern, so konfiguriert, dass sie die für den konkreten Anwendungszweck unter Sicherheitsaspekten erforderlichen Funktionalitäten zur Verfügung stellen können.

Abhängig vom konkreten Anwendungszweck ist der Modulaufbau derartiger modularer Sicherheitsschaltvorrichtungen häufig relativ komplex, da zur Realisierung der gewünschten Sicherheitsfunktionen zum Beispiel logische UND-Verknüpfungen berücksichtigt und implementiert werden müssen. Dementsprechend ist die Konfiguration der modularen Sicherheitsschaltvorrichtung, die nicht in einem automatisierten Prozess erfolgt, häufig schwierig, zeitaufwändig und potentiell mit Fehlern behaftet.

Die EP 1 936 457 zeigt ein Verfahren zur Konfiguration einer modularen Sicherheitsschaltvorrichtung, die eine Mehrzahl von Elektronikmodulen aufweist, die in zumindest einer Modulreihe angeordnet sind. Die Sicherheitsschaltvorrichtung kann über einen Web-Browser konfiguriert werden. Darüber hinaus können Module der Sicherheitsschaltvorrichtung über Drehschalter konfiguriert werden.

Die DE 10 2011 004312 zeigt ein Verfahren zur Konfiguration einer modularen Sicherheitsschaltvorrichtung, bei der abhängig von dem jeweiligen Montageort eines Gerätemoduls (z. B. seiner Position auf der jeweiligen Montageeinrichtung) der Konfigurationsserver eine Soll-Konfiguration des zu konfigurierenden Gerätemoduls ermitteln und diese Soll-Konfiguration auf dem montierten Gerätemodul einrichten kann. Dabei kann der Montageort des Gerätemoduls in einer Datenbank eingetragen werden. Darüber hinaus kann ein Konfigurationsserver auch den Typ eines tatsächlich montierten Gerätemoduls erfassen und mit den Projektierungsdaten vergleichen, um eine Fehlermeldung zu erzeugen, wenn am Montageort ein dort nicht vorgesehener Typ eines Gerätemoduls angebracht ist.

Die US 2009/077270 zeigt ein Verfahren zur Konfiguration einer verteilten Automatisierungsanlage, die sowohl datenbankgestützt ist als auch einen Drehschalter für einfache Einstellungen verwendet.

Die Aufgabe der vorliegenden Erfindung besteht darin, ein Verfahren zur Konfiguration einer modularen Sicherheitsschaltvorrichtung zur Verfügung zu stellen, welches den Konfigurationsprozess vereinfachen kann.

Die Lösung dieser Aufgabe liefert ein Verfahren zur Konfiguration einer modularen Sicherheitsschaltvorrichtung mit den Merkmalen des Anspruchs 1. Die Unteransprüche betreffen vorteilhafte Weiterbildungen der Erfindung.

Ein erfindungsgemäßes Verfahren zur Konfiguration einer modularen Sicherheitsschaltvorrichtung, die eine Mehrzahl von Elektronikmodulen aufweist, die in zumindest einer Modulreihe angeordnet sind, umfasst die Schritte
A) Auswählen eines Konfigurationsdatensatzes der modularen Sicherheitsschaltvorrichtung aus einer Mehrzahl von Konfigurationsdatensätzen, die in einer Konfigurationsdatenbank abrufbar gespeichert sind, und Übertragen des Konfigurationsdatensatzes zu einer Recheneinrichtung, wobei der Konfigurationsdatensatz mittels eines Computerprogramms, das von der Recheneinrichtung ausgeführt wird, derart verarbeitet wird, dass aus dem Konfigurationsdatensatz eine Soll-Konfiguration der modularen Sicherheitsschaltvorrichtung und der Elektronikmodule erzeugt wird,
B) Anzeigen der Soll-Konfiguration der modularen Sicherheitsschaltvorrichtung und der Elektronikmodule auf einer Anzeigevorrichtung,
C) Einstecken eines der Elektronikmodule in einen der Modulsteckplätze der Modulreihe,
D) Einstellen einer Drehschalterposition eines oder mehrerer Drehschalter des Elektronikmoduls,
E) Bestimmen einer Ist-Konfiguration des gemäß den Schritten C) und D) konfigurierten Elektronikmoduls mithilfe des von der Recheneinrichtung ausgeführten Computerprogramms,
F) Vergleichen der Ist-Konfiguration mit der Soll-Konfiguration des Elektronikmoduls mithilfe des von der Recheneinrichtung ausgeführten Computerprogramms,
G) Anzeigen, ob eine Abweichung zwischen der Ist-Konfiguration und der Soll-Konfiguration des Elektronikmoduls vorliegt oder nicht, und bejahendenfalls Wiederholen der Schritte C), E) bis G), wenn das Elektronikmodul in einen falschen Modulsteckplatz der Modulreihe eingesteckt ist, oder Wiederholen der Schritte D) bis G), wenn eine Drehschalterposition fehlerhaft eingestellt ist,
H) Wiederholen der Schritte C) bis G) für jedes weitere Elektronikmodul der modularen Sicherheitsschaltvorrichtung.

Das erfindungsgemäße Verfahren ermöglicht eine erheblich vereinfachte Konfiguration der modularen Sicherheitsschaltvorrichtung, da einem Werker Informationen über die Soll-Konfiguration angezeigt werden und überprüft wird, ob eine Abweichung zwischen der Ist- und der Soll-Konfiguration vorliegen und eine etwaige Abweichung entsprechend angezeigt wird. Vorzugsweise werden auch Anweisungen zur Fehlerbehebung von der Anzeigevorrichtung angezeigt. Informationen über die Ist-Konfiguration der Elektronikmodule der modularen Sicherheitsschaltvorrichtung können insbesondere über eine Kommunikationsschnittstelle von der modularen Sicherheitsschaltvorrichtung zur Recheneinrichtung übertragen und mithilfe des Computerprogramms ausgewertet werden.

Um den Verfahrensablauf weiter zu optimieren, ist es vorteilhaft, dass die Schritte E) bis F) sowie das Anzeigen, ob eine Abweichung zwischen der Ist-Konfiguration und der Soll-Konfiguration des Elektronikmoduls vorliegt oder nicht, in Echtzeit ausgeführt werden. Somit kann der Werker unmittelbar erkennen, ob das soeben in der Modulreihe montierte Elektronikmodul in den richtigen Modulsteckplatz eingesteckt wurde und die Drehschaltereinstellungen korrekt vorgenommen wurden.

Um die Montage und Konfiguration der modularen Sicherheitsschaltvorrichtung weiter zu vereinfachen, besteht in einer bevorzugten Ausführungsform die Möglichkeit, dass der Schritt des Anzeigens der Soll-Konfiguration der modularen Sicherheitsschaltvorrichtung und der Elektronikmodule auf der Anzeigevorrichtung das Anzeigen eines Verdrahtungsplans für eine Verdrahtung der Elektronikmodule umfasst. Somit kann der Werker neben der Soll-Konfiguration der modularen Sicherheitsschaltvorrichtung und der Elektronikmodule auch den zugehörigen Verdrahtungsplan auf der Anzeigevorrichtung erfassen.

In einer besonders bevorzugten Ausführungsform besteht die Möglichkeit, dass der Verdrahtungsplan auf Basis des Konfigurationsdatensatzes von dem Computerprogramm, das von der Recheneinrichtung ausgeführt wird, generiert wird. Alternativ besteht zum Beispiel auch die Möglichkeit, dass der Verdrahtungsplan in der Konfigurationsdatenbank gespeichert und mit dem zugehörigen Konfigurationsdatensatz verknüpft ist und von der Recheneinrichtung ausgelesen wird.

In einer vorteilhaften Ausführungsform wird vorgeschlagen, dass als erstes Elektronikmodul ein zentrales Steuerungsmodul der modularen Sicherheitsschaltvorrichtung in der Modulreihe montiert wird. Die übrigen Elektronikmodule sind anwendungsspezifisch aus einer Vielzahl unterschiedlicher Elektronikmodultypen ausgewählt. Bei den übrigen Elektronikmodulen kann es sich zum Beispiel um Eingangsmodule, die Eingangssignale eines oder mehrerer Signalgeber, wie zum Beispiel Eingangssignale von Sensoren oder Notbefehlsgeräten, sicher empfangen und gegebenenfalls verarbeiten können, Ausgangsmodule, die Ausgangssignale an einen oder mehrere daran angeschlossene Aktoren sicher ausgeben können, kombinierte Eingangs- und Ausgangsmodule (so genannte I/O-Module), die Eingänge und Ausgänge aufweisen und deren Funktionen in einem Modul vereinen, sowie Schnittstellenmodule, Feldbuscontroller, Feldbuskoppler, etc. handeln.

In einer besonders vorteilhaften Ausführungsform kann vorgesehen sein, dass vom ersten Elektronikmodul überprüft wird, in welche Modulsteckplätze der Modulreihe die übrigen Elektronikmodule bei der Montage eingesteckt werden und in welche Stellungen der oder die Drehschalter des betreffenden Elektronikmoduls gebracht werden, wobei diese Informationen von dem ersten Elektronikmodul zur Recheneinrichtung übertragen werden. Diese Informationen, die über eine Kommunikationsschnittstelle abgefragt und übertragen werden können, welche vorzugsweise Teil des ersten Elektronikmoduls ist, können von dem Computerprogramm entsprechend ausgewertet werden.

In einer vorteilhaften Weiterbildung besteht die Möglichkeit, dass durch eine automatische Aktivierung einer oder mehrerer Leuchteinheiten, vorzugsweise einer oder mehrerer Leuchtdioden, der Elektronikmodule angezeigt wird, ob die Elektronikmodule in die richtigen Modulsteckplätze eingesteckt worden sind oder nicht. Es kann zum Beispiel auch vorgesehen sein, dass durch eine automatische Aktivierung der Leuchteinheiten angezeigt wird, ob die Drehschalterpositionen der Drehschalter der Elektronikmodule richtig eingestellt worden sind oder nicht. Die Aktivierung beziehungsweise Ansteuerung der Leuchteinheiten kann vorzugsweise mithilfe des ersten Elektronikmoduls erfolgen, welches das Steuerungsmodul der modularen Sicherheitsschaltvorrichtung bildet.

Vorzugsweise können die Seriennummern der Elektronikmodule ausgelesen und in einem nicht-flüchtigen Speichermittel der Recheneinrichtung oder in der Konfigurationsdatenbank gespeichert werden. Das Auslesen der Seriennummern kann zum Beispiel mittels des ersten Elektronikmoduls oder mithilfe eines Handscanners erfolgen.

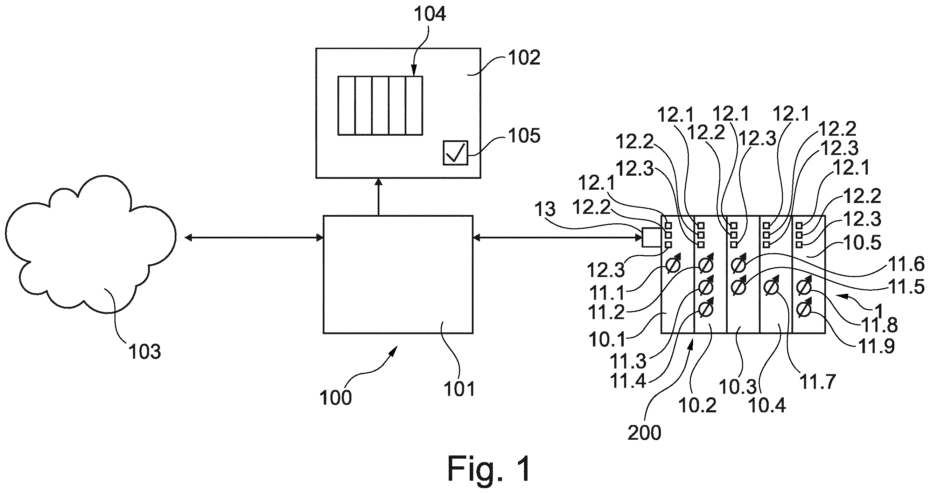

Weitere Merkmale und Vorteile der vorliegenden Erfindung werden deutlich anhand der nachfolgenden Beschreibung eines bevorzugten Ausführungsbeispiels unter Bezugnahme auf die beiliegende Fig. 1, die ein Konfigurationssystem 100 in schematisch stark vereinfachter Form zeigt, welches zur Durchführung eines Verfahrens zur Konfiguration einer modularen Sicherheitsschaltvorrichtung 1 geeignet ist.

Die modulare Sicherheitsschaltvorrichtung 1 weist eine Mehrzahl n von Elektronikmodulen 10.1-10.5 auf, die in mindestens einer Modulreihe 200 angeordnet sind. In dem hier gezeigten Ausführungsbeispiel sind n = 5 Elektronikmodule 10.1-10.5 vorgesehen. Ein erstes Elektronikmodul 10.1 bildet dabei ein zentrales Steuerungsmodul der modularen Sicherheitsschaltvorrichtung 1 und wird häufig auch als Kopfmodul bezeichnet. Die übrigen Elektronikmodule 10.2-10.5 sind anwendungsspezifisch aus einer Vielzahl unterschiedlicher Elektronikmodultypen ausgewählt. Bei den übrigen Elektronikmodulen 10.2-10.5 kann es sich zum Beispiel um Eingangsmodule, die Eingangssignale eines oder mehrerer Signalgeber, wie zum Beispiel Eingangssignale von Sensoren oder Notbefehlsgeräten, sicher empfangen und gegebenenfalls verarbeiten können, Ausgangsmodule, die Ausgangssignale an einen oder mehrere daran angeschlossene Aktoren sicher ausgeben können, kombinierte Eingangs- und Ausgangsmodule (so genannte I/O-Module), die Eingänge und Ausgänge aufweisen und deren Funktionen in einem Modul vereinen, sowie Schnittstellenmodule, Feldbuscontroller, Feldbuskoppler, etc. handeln.

Die Anzahl und Art der verwendeten Elektronikmodule 10.1-10.5 hängt unmittelbar vom geplanten Einsatz- und Verwendungszweck der modularen Sicherheitsschaltvorrichtung 1 und insbesondere auch von dem von der modularen Sicherheitsschaltvorrichtung 1 zu erreichenden Sicherheitsniveau ab. Generell besteht die Aufgabe der modularen Sicherheitsschaltvorrichtung 1 darin, beim Auftreten einer Gefahrensituation, die von den Sensoren beziehungsweise Meldegeräten erfasst wird, die an die modulare Sicherheitsschaltvorrichtung 1 angeschlossenen Aktoren sicherheitsgerichtet abzuschalten und nach dem Ende der Gefahrensituation wieder zu aktivieren.

Abhängig vom Verwendungszweck der modularen Sicherheitsschaltvorrichtung 1 und der damit verbundenen Komplexität können sowohl die Konfiguration des Modulaufbaus als auch die Konfiguration der modularen Sicherheitsschaltvorrichtung 1 sehr aufwändig und schwierig sein und damit auch fehlerbehaftet sein. Nachfolgend soll ein Verfahren beschrieben werden, mittels dessen der Konfigurationsprozess der modularen Sicherheitsschaltvorrichtung 1 erheblich vereinfacht werden kann.

Das Konfigurationssystem 100 umfasst eine Recheneinrichtung 101, an die eine Anzeigevorrichtung 102 angeschlossen ist. Die Recheneinrichtung 101 steht mit einer Konfigurationsdatenbank 103 in Kommunikationsverbindung, in der Konfigurationsdatensätze und gegebenenfalls weitere mit diesen verknüpften Informationen über die Konfigurationen einer Mehrzahl modularer Sicherheitsschaltvorrichtungen 1 abrufbar gespeichert sind. Die Konfigurationsdatenbank 103 kann zum Beispiel Teil eines Online-Bestellsystems sein, das vorzugsweise webbasiert arbeitet. Die Konfigurationsdatensätze, die in der Konfigurationsdatenbank 103 abrufbar gespeichert sind, entsprechen somit den Soll-Konfigurationen der Sicherheitsschaltvorrichtungen 1 und der zugehörigen Elektronikmodule 10.1-10.5.

Nach dem Auslösen eines Auftrags zur Fertigung einer modularen Sicherheitsschaltvorrichtung 1 kann der dieser Sicherheitsschaltvorrichtung 1 zugeordnete und in der Konfigurationsdatenbank 103 abrufbar gespeicherte Konfigurationsdatensatz von der Recheneinrichtung 101 ausgelesen und mittels eines Computerprogramms, das von der Recheneinrichtung 101 ausgeführt wird, weiterverarbeitet werden. Sofern vorgesehen, können auch noch weitere Informationen, welche insbesondere den Aufbau und die Konfiguration der modularen Sicherheitsschaltvorrichtung 1 betreffen können und die in der Konfigurationsdatenbank 103 abrufbar gespeichert und mit dem Konfigurationsdatensatz verknüpft sind, von der Recheneinrichtung 101 ausgelesen und weiterverarbeitet werden. Beispielsweise können ein Verdrahtungsplan und/oder Sicherheitskennzahlen der modularen Sicherheitsschaltvorrichtung 1, die mit dem zugehörigen Konfigurationsdatensatz verknüpft sind oder auch einen Teil des Konfigurationsdatensatzes bilden können, von der Recheneinrichtung 101 aus der Konfigurationsdatenbank 103 ausgelesen und mittels des Computerprogramms weiterverarbeitet werden.

Auf Basis des Konfigurationsdatensatzes generiert das Computerprogramm, welches von der Recheneinrichtung 101 ausgeführt wird, eine Soll-Konfiguration der modularen Sicherheitsschaltvorrichtung 1 und der zugehörigen Elektronikmodule 10.1-10.5. Auf der Anzeigevorrichtung 102 wird eine visuelle Darstellung 104 der Soll-Konfiguration generiert, welche einem Werker den Aufbau der modularen Sicherheitsschaltvorrichtung 1 aus den einzelnen Elektronikmodulen 10.1-10.5, insbesondere deren Positionen innerhalb der Modulreihe 200 und deren Drehschaltereinstellungen, veranschaulicht. Die Elektronikmodule 10.1-10.5 weisen jeweils einen oder mehrere Drehschalter 11.1-11.9 auf, die insbesondere als Rastpotentiometer ausgeführt sein können. Die korrekte Einstellung der Drehpositionen der Drehschalter 11.1-11.9 ist später für eine einwandfreie Funktion der modularen Sicherheitsschaltvorrichtung 1 wichtig. Vorzugsweise kann zur weiteren Vereinfachung der Konfiguration auch der Verdrahtungsplan der modularen Sicherheitsschaltvorrichtung 1 mittels der Anzeigevorrichtung 102 visualisiert werden. Anhand der visuellen Darstellung 104 der modularen Sicherheitsschaltvorrichtung 1, welche die Einstellungen der Drehpositionen der Drehschalter 11.1-11.9 und vorzugsweise auch den Verdrahtungsplan umfasst, kann nun die Konfiguration der Elektronikmodule 10.1-10.5 sehr einfach vorgenommen werden.

Mittels des hier vorgestellten Verfahrens wird in Echtzeit überprüft, ob die Elektronikmodule 10.1.-10.5 der modularen Sicherheitsschaltvorrichtung 1 gemäß den Konfigurationsvorgaben in der richtigen Reihenfolge in der Modulreihe 200 angeordnet werden und ob die Drehpositionen der Drehschalter 11.1-11.9 korrekt eingestellt werden. Somit erfolgt bereits während der Konfiguration eine Selbstdiagnose der modularen Sicherheitsschaltvorrichtung 1 in Echtzeit.

Jede modulare Sicherheitsschaltvorrichtung 1 weist ein erstes Elektronikmodul 10.1 auf, welches das zentrale Steuerungsmodul bildet und bei der Montage vorzugsweise stets als erstes in einen dafür vorgesehenen Modulsteckplatz der Modulreihe 200 eingesteckt wird. Die Recheneinrichtung 101 steht mit dem ersten Elektronikmodul 10.1 mittels einer Kommunikationsschnittstelle 13, welche vorzugsweise eine Komponente des ersten Elektronikmoduls 10.1 ist, in Kommunikationsverbindung. Über diese Kommunikationsschnittstelle 13 können während des Konfigurationsprozesses Informationen abgefragt und zur Recheneinrichtung 101 übertragen werden und von dem Computerprogramm, welches von der Recheneinrichtung 101 ausgeführt wird, entsprechend verarbeitet und ausgewertet werden.

Anschließend werden die übrigen Elektronikmodule 10.2-10.5 der modularen Sicherheitsschaltvorrichtung 1 nacheinander in die hierfür vorgesehenen Modulsteckplätze der Modulreihe 200 eingesteckt. Ferner werden nach dem Einstecken jedes der Elektronikmodul 10.1-10.5 die Drehschalter 11.1-11.9 des betreffenden Elektronikmoduls 10.1-10.5 vom Werker - den Konfigurationsvorgaben entsprechend - eingestellt.

Nach der Konfiguration des ersten Elektronikmoduls 10.1 in dem zugehörigen Modulsteckplatz der Modulreihe 200 kann dieses vorzugsweise einen Selbsttest durchführen, um zu überprüfen, ob es in den richtigen Modulsteckplatz eingesteckt wurde und ob der oder die Drehschalter 11.1 dieses ersten Elektronikmoduls 10.1 vom Werker in die richtige Drehstellung gebracht wurden. Bejahendenfalls erhält der Werker eine entsprechende Rückmeldung, die vorzugsweise mittels der Anzeigevorrichtung 102 visualisiert wird. Alternativ oder zusätzlich kann eine entsprechende Visualisierung auch an dem ersten Elektronikmodul 10.1 erfolgen. Letzteres wird weiter unten noch näher erläutert. Alternativ kann die Überprüfung, ob das erste Elektronikmodul 10.1 in den richtigen Modulsteckplatz eingesteckt wurde und ob der oder die Drehschalter 11.1 dieses ersten Elektronikmoduls 10.1 vom Werker in die richtige Drehstellung gebracht wurden, auch von dem Computerprogramm durchgeführt werden, das von der Recheneinrichtung 101 ausgeführt wird. Die Recheneinrichtung 101, die mittels der Kommunikationsschnittstelle 13 mit dem ersten Elektronikmodul 10.1 in Kommunikationsverbindung steht, kann die entsprechenden Informationen empfangen und mittels des Computerprogramms auswerten.

Anschließend werden die übrigen Elektronikmodule 10.2-10.5 vom Werker Modul für Modul in die zugehörigen Modulsteckplätze der Modulreihe 200 eingesteckt und der oder die Drehschalter 11.2-11.9 dieser Elektronikmodule 10.2-10.5 werden entsprechend eingestellt.

Das erste Elektronikmodul 10.1 testet in Echtzeit durch entsprechende Abfragen, in welchen Modulsteckplatz der Modulreihe 200 das jeweilige Elektronikmodul 10.2-10.5 vom Werker bei der Montage eingesteckt wurde und in welchen Stellungen sich der oder die Drehschalter 11.2-11.9 des betreffenden Elektronikmoduls 10.2-10.5 befinden. Diese Informationen werden vom ersten Elektronikmodul 10.1 zum Zweck der Weiterverarbeitung über die Kommunikationsschnittstelle 13 zur Recheneinrichtung 101 übertragen und von dem Computerprogramm, das von der Recheneinrichtung 101 ausgeführt wird, verarbeitet und ausgewertet. Ferner werden vorzugsweise auch die Seriennummern der Elektronikmodule 10.1-10.5 ausgelesen und von der Recheneinrichtung 101 gespeichert. Der Speicherort kann zum Beispiel auch die Konfigurationsdatenbank 103 sein. Das Auslesen der Seriennummern kann zum Beispiel automatisiert mithilfe des ersten Elektronikmoduls 10.1 erfolgen, welches die Seriennummern aus den übrigen Elektronikmodulen 10.2-10.5 ausliest. Denkbar ist auch ein manuelles Scannen der Seriennummern der Elektronikmodule 10.1-10.5, insbesondere mittels eines Handscanners, vor dem Einstecken des betreffenden Elektronikmoduls 10.1-10.5 in den hierfür vorgesehenen Modulsteckplatz der Modulreihe 200. Die auf diese Weise ausgelesenen Seriennummern werden von dem Handscanner zur Recheneinrichtung 101 übertragen.

Wie bereits erwähnt, werden mittels des Computerprogramms der Recheneinrichtung 101 die vom ersten Elektronikmodul 10.1 in Echtzeit erfassten Informationen über die übrigen Elektronikmodule 10.2-10.5 weiterverarbeitet. Dabei wird stets die Ist-Konfiguration mit der Soll-Konfiguration verglichen. Mögliche Abweichungen beziehungsweise Konfigurationsfehler, wie zum Beispiel die Auswahl eines falschen Modulsteckplatzes für das betreffende Elektronikmodul 10.2-10.5 oder fehlerhafte Einstellungen des Drehschalters 11.2-11.9 beziehungsweise der Drehschalter 11.2-11.9 des betreffenden Elektronikmoduls 10.2-10.5 werden dem Werker optisch angezeigt. Dieses kann vorzugsweise mittels der Anzeigevorrichtung 102 der Recheneinrichtung 101 erfolgen, wobei dem Werker neben dem Vorhandensein eines Fehlers vorzugsweise auch eine entsprechende Änderungsanweisung optisch angezeigt werden kann.

Zusätzlich oder alternativ kann die optische Anzeige der korrekten Montage und Konfiguration der Elektronikmodule 10.1-10.5 und möglicher Montage- und Konfigurationsfehler auch mittels der Elektronikmodule 10.1-10.5 selbst erfolgen. Jedes der Elektronikmodule 10.1-10.5 weist zu diesem Zweck eine Anzahl farbiger Leuchtdioden 12.1, 12.2, 12.3 auf, die vorzugsweise in unterschiedlichen Leuchtfarben leuchten können. Beispielsweise kann jedes der Elektronikmodule10.1-10.5 drei farbige Leuchtdioden 12.1, 12.2, 12.3 aufweisen. Eine erste Leuchtdiode 12.1 leuchtet nach der Aktivierung in der Farbe Rot, eine zweite Leuchtdiode 12.2 leuchtet in der Farbe Gelb und eine dritte Leuchtdiode 12.3 leuchtet in der Farbe Grün. Die Leuchtfunktionen der Leuchtdioden 12.1, 12.2, 12.3 können auch in einer einzige RGB-Leuchtdiode vereint sein. Vorzugsweise werden die Leuchtdioden 12.1, 12.2, 12.3, die aus funktionaler Sicht Leuchteinheiten der Elektronikmodule 10.1-10.5 bilden, auch als Leuchtanzeigen während des Regelbetriebs der modularen Sicherheitsschaltvorrichtung 1 verwendet.

Diese drei Leuchtdioden 12.1, 12.2, 12.3 können zum Beispiel folgende Informationen visualisieren:
- Die erste Leuchtdiode 12.1 eines Elektronikmoduls 10.1-10.5 leuchtet oder blinkt in der Farbe Rot: Das Elektronikmodul 10.1-10.5 wurde in einen falschen Modulsteckplatz der Modulreihe 200 eingesteckt.
- Die zweite Leuchtdiode 12.2 eines Elektronikmoduls 10.1-10.5 leuchtet oder blinkt in der Farbe Gelb: Die Einstellungen eines oder mehrerer Drehschalter 11.1-11.9 des betreffenden Elektronikmoduls 10.1-10.5 sind fehlerhaft.
- Die dritte Leuchtdiode 12.3 eines Elektronikmoduls 10.1-10.5 leuchtet oder blinkt in der Farbe Grün: Das Elektronikmodul 10.1-10.5 wurde bei der Montage in den richtigen Modulsteckplatz der Modulreihe 200 eingesteckt und alle Drehschaltereinstellungen sind korrekt.

Die Leuchtdioden 12.1, 12.2, 12.3 ermöglichen es im Fehlerfall nicht unmittelbar, einen Weg zur Korrektur des zugehörigen Fehlers anzuzeigen. Vielmehr dienen die Leuchtdioden 12.1, 12.2, 12.3 in erster Linie dem Zweck, fehlerhaft montierte beziehungsweise konfigurierte Elektronikmodule 10.1-10.5 möglichst rasch aufzufinden und zumindest den grundlegenden Fehler - d.h. falsch gestecktes Elektronikmodul 10.1-10.5 oder fehlerhafte Drehschaltereinstellungen - zu erfassen. Daher ist die Kombination der Leuchtdioden 12.1, 12.2, 12.3 für ein rasches Auffinden des Fehlerorts mit der Anzeigevorrichtung 102, mittels derer dem Werker detaillierte Wege zur Fehlerbeseitigung aufgezeigt werden können, sehr vorteilhaft.

Im Fehlerfall ändert der Werker nun auf Basis der ihm zur Verfügung gestellten Anweisungen die Konfiguration des betroffenen Elektronikmoduls 10.1-10.5 entsprechend und der Vergleich zwischen der Soll-Konfiguration und der Ist-Konfiguration des Elektronikmoduls 10.1-10.5 wird erneut in Echtzeit durchgeführt. Dieser Vergleichsprozess zwischen der Ist- und der Soll-Konfiguration der Elektronikmodule 10.1-10.5 und die Anzeige möglicher Fehler wird iterativ so lange durchgeführt, bis sämtliche Elektronikmodule 10.1-10.5 der modularen Sicherheitsschaltvorrichtung 1 korrekt montiert und konfiguriert sind. Der Werker bekommt anschließend eine Rückmeldung auf der Anzeigevorrichtung 102, insbesondere in einem dafür vorgesehenen Anzeigebereich 105, und vorzugsweise auch auf den Elektronikmodulen 10.1-10.5 durch die in der Farbe Grün leuchtenden Leuchtdioden 12.3.

Nach Abschluss des Konfigurationsprozesses kann die Konfiguration vorzugsweise in einem nicht-flüchtigen Speichermittel der modularen Sicherheitsschaltvorrichtung 1 abrufbar gespeichert werden. Vorzugsweise kann nach Abschluss des Produktionsprozesses der modularen Sicherheitsschaltvorrichtung 1 ein Datensatz erzeugt werden, der gegebenenfalls auch die Seriennummern der verbauten Elektronikmodule 10.1-10.5 umfassen kann, und in der Konfigurationsdatenbank 103 oder in einem anderen Speichermittel, insbesondere in einem Speichermittel des Bestellsystems, abrufbar gespeichert wird.

Mittels des hier vorgestellten Verfahrens kann die Konfiguration der modularen Sicherheitsschaltvorrichtung 1 erheblich vereinfacht werden, da dem Werker in Echtzeit optisch angezeigt wird, ob ein Elektronikmodul 10.1-10-5 korrekt in den dafür vorgesehenen Modulsteckplatz der Modulreihe 200 eingesteckt wurde und alle Drehschaltereinstellungen korrekt vorgenommen wurden. Das hier vorgestellte Verfahren ermöglicht eine Prozessoptimierung, die zu einer Kosteneinsparung bei der Herstellung modularer Sicherheitsschaltvorrichtungen 1 beiträgt.

## Patentansprüche

1. Verfahren zur Konfiguration einer modularen Sicherheitsschaltvorrichtung (1), die eine Mehrzahl von Elektronikmodulen (10.1-10.5) aufweist, die in zumindest einer Modulreihe (200) angeordnet sind, umfassend die Schritte
A) Auswählen eines Konfigurationsdatensatzes der modularen Sicherheitsschaltvorrichtung (1) aus einer Mehrzahl von Konfigurationsdatensätzen, die in einer Konfigurationsdatenbank (103) abrufbar gespeichert sind, und Übertragen des Konfigurationsdatensatzes zu einer Recheneinrichtung (101), wobei der Konfigurationsdatensatz mittels eines Computerprogramms, das von der Recheneinrichtung (101) ausgeführt wird, derart verarbeitet wird, dass aus dem Konfigurationsdatensatz eine Soll-Konfiguration der modularen Sicherheitsschaltvorrichtung (1) und der Elektronikmodule (10.1-10.5) erzeugt wird,
B) Anzeigen der Soll-Konfiguration der modularen Sicherheitsschaltvorrichtung (1) und der Elektronikmodule (10.1-10.5) auf einer Anzeigevorrichtung (102),
C) Einstecken eines der Elektronikmodule (10.1-10.5) in einen der Modulsteckplätze der Modulreihe (200),
D) Einstellen einer Drehschalterposition eines oder mehrerer Drehschalter (11.1-11.9) des Elektronikmoduls (10.1-10.5),
E) Bestimmen einer Ist-Konfiguration des gemäß den Schritten C) und D) konfigurierten Elektronikmoduls (10.1-10.5) mithilfe des von der Recheneinrichtung (101) ausgeführten Computerprogramms,
F) Vergleichen der Ist-Konfiguration mit der Soll-Konfiguration des Elektronikmoduls (10.1-10.5) mithilfe des von der Recheneinrichtung (101) ausgeführten Computerprogramms,
G) Anzeigen, ob eine Abweichung zwischen der Ist-Konfiguration und der Soll-Konfiguration des Elektronikmoduls (10.1-10.5) vorliegt oder nicht, und bejahendenfalls Wiederholen der Schritte C), E) bis G), wenn das Elektronikmodul (10.1-10.5) in einen falschen Modulsteckplatz der Modulreihe (200) eingesteckt ist, oder Wiederholen der Schritte D) bis G), wenn eine Drehschalterposition fehlerhaft eingestellt ist,
H) Wiederholen der Schritte C) bis G) für jedes weitere Elektronikmodul (10.1-10.5) der modularen Sicherheitsschaltvorrichtung (1).

2. Verfahren nach Anspruch 1, **dadurch gekennzeichnet, dass** die Schritte E) bis F) sowie das Anzeigen, ob eine Abweichung zwischen der Ist-Konfiguration und der Soll-Konfiguration des Elektronikmoduls (10.1-10.5) vorliegt oder nicht, in Echtzeit ausgeführt werden.

3. Verfahren nach einem der Ansprüche 1 oder 2, **dadurch gekennzeichnet, dass** der Schritt des Anzeigens der Soll-Konfiguration der modularen Sicherheitsschaltvorrichtung (1) und der Elektronikmodule (10.1-10.5) auf der Anzeigevorrichtung (102) das Anzeigen eines Verdrahtungsplans für eine Verdrahtung der Elektronikmodule (10.1-10.5) umfasst.

4. Verfahren nach Anspruch 3, **dadurch gekennzeichnet, dass** der Verdrahtungsplan auf Basis des Konfigurationsdatensatzes von dem Computerprogramm, das von der Recheneinrichtung (101) ausgeführt wird, generiert wird.

5. Verfahren nach Anspruch 3, **dadurch gekennzeichnet, dass** der Verdrahtungsplan in der Konfigurationsdatenbank (103) gespeichert und mit dem zugehörigen Konfigurationsdatensatz verknüpft ist und von der Recheneinrichtung (101) ausgelesen wird.

6. Verfahren nach einem der Ansprüche 1 bis 5, **dadurch gekennzeichnet, dass** als erstes Elektronikmodul (10.1) ein zentrales Steuerungsmodul der modularen Sicherheitsschaltvorrichtung (1) in der Modulreihe (200) montiert wird.

7. Verfahren nach Anspruch 6, **dadurch gekennzeichnet, dass** vom ersten Elektronikmodul (10.1) überprüft wird, in welche Modulsteckplätze der Modulreihe (200) die übrigen Elektronikmodule (10.2-10.5) bei der Montage eingesteckt werden und in welche Stellungen der oder die Drehschalter (11.2-11.9) des betreffenden Elektronikmoduls (10.2-10.5) gebracht werden, wobei diese Informationen von dem ersten Elektronikmodul (10.1) zur Recheneinrichtung (101) übertragen werden.

8. Verfahren nach einem der Ansprüche 1 bis 7, **dadurch gekennzeichnet, dass** durch eine automatische Aktivierung einer oder mehrerer Leuchteinheiten, vorzugsweise einer oder mehrerer Leuchtdioden (12.1, 12.2, 12.3), der Elektronikmodule (10.1-10.5) angezeigt wird, ob die Elektronikmodule (10.1-10.5) in die richtigen Modulsteckplätze eingesteckt worden sind oder nicht.

9. Verfahren nach Anspruch 8, **dadurch gekennzeichnet, dass** durch eine automatische Aktivierung der Leuchteinheiten, angezeigt wird, ob die Drehschalterpositionen der Drehschalter (11.1-11.9) der Elektronikmodule (10.1-10.5) richtig eingestellt worden sind oder nicht.

10. Verfahren nach einem der Ansprüche 1 bis 9, **dadurch gekennzeichnet, dass** die Seriennummern der Elektronikmodule (10.1-10.5) ausgelesen und in einem nicht-flüchtigen Speichermittel der Recheneinrichtung (101) oder in der Konfigurationsdatenbank (103) gespeichert werden.

## Claims

1. Method for configuring a modular safety switching device (1) having a plurality of electronic modules (10.1-10.5) arranged in at least one module row (200), comprising the steps of
A) selecting a configuration data set of the modular safety switching device (1) from a plurality of configuration data sets that are stored in a configuration database (103) such that they can be called up, and transmitting the configuration data set to a computing device (101), the configuration data set being processed by means of a computer program that is executed by the computing device (101) in such a way that a desired configuration of the modular safety switching device (1) and of the electronic modules (10.1-10.5) is produced from the configuration data set,
B) displaying the desired configuration of the modular safety switching device (1) and the electronic modules (10.1-10.5) on a display device (102),
C) plugging one of the electronic modules (10.1-10.5) into one of the module slots of the module row (200),
D) setting a rotary switch position of one or more rotary switches (11.1-11.9) of the electronic module (10.1-10.5),
E) determining an actual configuration of the electronic module (10.1-10.5) configured according to steps C) and D) using the computer program executed by the computing device (101),
F) comparing the actual configuration with the desired configuration of the electronic module (10.1-10.5) using the computer program executed by the computing device (101),
G) displaying whether or not there is a deviation between the actual configuration and the target configuration of the electronic module (10.1-10.5) and, if so, repeating steps C), E) to G) if the electronic module (10.1-10.5) is plugged into an incorrect module slot of the module row (200), or repeating steps D) to G) if a rotary switch position is incorrectly set,
H) repeating steps C) to G) for each further electronic module (10.1-10.5) of the modular safety switching device (1).

2. Method according to claim 1, **characterised in that** steps E) to F) as well as displaying whether or not there is a deviation between the actual configuration and the desired configuration of the electronic module (10.1-10.5) are carried out in real time.

3. Method according to any one of claims 1 or 2, **characterised in that** the step of displaying the desired configuration of the modular safety switching device (1) and the electronic modules (10.1-10.5) on the display device (102) comprises displaying a wiring diagram for a wiring of the electronic modules (10.1-1 0.5).

4. Method according to claim 3, **characterised in that** the wiring diagram is generated on the basis of the configuration data set by the computer program executed by the computing device (101).

5. Method according to claim 3, **characterised in that** the wiring diagram is stored in the configuration database (103) and is linked to the associated configuration data set and is read by the computing device (101).

6. Method according to any one of claims 1 to 5, **characterised in that** a central control module of the modular safety switching device (1) is mounted in the module row (200) as the first electronic module (10.1).

7. Method according to claim 6, **characterised in that** the first electronic module (10.1) checks into which module slots of the module row (200) the remaining electronic modules (10.2-10.5) are plugged during assembly and into which positions the rotary switch or switches (11.2-11.9) of the electronic module (10.2-10.5) concerned are brought, this information being transmitted from the first electronic module (10.1) to the computing device (101).

8. Method according to any one of claims 1 to 7, **characterised in that** by an automatic activation of one or more light units, preferably one or more light emitting diodes (12.1, 12.2, 12.3), of the electronic modules (10.1-10.5) it is indicated whether or not the electronic modules (10.1-10.5) have been plugged into the correct module slots.

9. Method according to claim 8, **characterised in that** by an automatic activation of the light units it is indicated whether or not the rotary switch positions of the rotary switches (11.1-11.9) of the electronic modules (10.1-10.5) have been set correctly.

10. Method according to any one of claims 1 to 9, **characterised in that** the serial numbers of the electronic modules (10.1-10.5) are read and stored in a non-volatile memory means of the computing device (101) or in the configuration database (103).

## Revendications

1. Procédé de configuration d'un dispositif de commutation de sécurité modulaire (1), qui présente une pluralité de modules électroniques (10.1-10.5), qui sont disposés dans au moins une rangée de modules (200), comprenant l'étape consistant à
A) choisir un jeu de données de configuration du dispositif de commutation de sécurité modulaire (1) parmi une pluralité de jeux de données de configuration, qui sont enregistrés de manière à pouvoir être consultés dans une base de données de configuration (103), et transmettre le jeu de données de configuration à un calculateur (101), dans lequel le jeu de données de configuration au moyen d'un programme informatique, qui est exécuté par le calculateur (101), est traité de telle manière qu'une configuration théorique du dispositif de commutation de sécurité modulaire (1) et du module électronique (10.1-10.5) est générée à partir du jeu de données de configuration,
B) afficher la configuration théorique du dispositif de commutation de sécurité modulaire (1) et du module électronique (10.1-10.5) sur un dispositif d'affichage (102),
C) insérer l'un des modules électroniques (10.1-10.5) dans l'un des emplacements de modules de la rangée de modules (200),
D) paramétrer une position de commutateur rotatif d'un ou plusieurs commutateurs rotatifs (11.1-11.9) du module électronique (10.1-10.5),
E) déterminer une configuration théorique du module électronique (10.1-10.5) configuré conformément aux étapes C) et D) à l'aide du programme informatique exécuté par le calculateur (101),
F) comparer la configuration réelle et la configuration théorique du module électronique (10.1-10.5) à l'aide du programme informatique exécuté par le calculateur (101),
G) afficher, de manière à savoir s'il existe ou non un écart entre la configuration réelle et la configuration théorique du module électronique (10.1-10.5), et dans l'affirmative répéter les étapes C), E) à G), lorsque le module électronique (10.1-10.5) est inséré dans un mauvais emplacement de modules de la rangée de modules (200), ou répéter les étapes D) à G), lorsqu'une position de commutateur rotatif est paramétrée de manière incorrecte,
H) répéter les étapes C) à G) pour chaque autre module électronique (10.1-10.5) du dispositif de commutation de sécurité modulaire (1).

2. Procédé selon la revendication 1, **caractérisé en ce que** les étapes E) à F) ainsi que l'affichage, permettant de savoir s'il existe ou non un écart entre la configuration réelle et la configuration théorique du module électronique (10.1-10.5), sont réalisés en temps réel.

3. Procédé selon l'une quelconque des revendications 1 ou 2, **caractérisé en ce que** l'étape consistant à afficher la configuration théorique du dispositif de commutation de sécurité modulaire (1) et le module électronique (10.1-10.5) comprend sur le dispositif d'affichage (102) l'affichage d'un schéma de câblage pour un câblage du module électronique (10.1-10.5).

4. Procédé selon la revendication 3, **caractérisé en ce que** le schéma de câblage est généré sur la base du jeu de données de configuration par le programme informatique, qui est exécuté par le calculateur (101).

5. Procédé selon la revendication 3, **caractérisé en ce que** le schéma de câblage est enregistré dans la base de données de configuration (103) et est relié au jeu de données de configuration correspondant et est lu par le calculateur (101).

6. Procédé selon l'une quelconque des revendications 1 à 5, **caractérisé en ce qu'**un module de commande central du dispositif de commutation de sécurité modulaire (1) est monté comme premier module électronique (10.1) dans la rangée de modules (200).

7. Procédé selon la revendication 6, **caractérisé en ce qu'**il est vérifié par le premier module électronique (10.1), dans quels emplacements de modules de la rangée de modules (200) les autres modules électroniques (10.2-10.5) sont insérés lors du montage et dans quelles positions le ou les commutateurs rotatifs (11.2-11.9) du module électronique (10.2-10.5) concerné sont amenés, dans lequel ces informations sont transmises du premier module électronique (10.1) au calculateur (101).

8. Procédé selon l'une quelconque des revendications 1 à 7, **caractérisé en ce que** par une activation automatique d'une ou plusieurs unités d'éclairage, de préférence d'une ou plusieurs diodes électroluminescentes (12.1, 12.2, 12.3), le module électronique (10.1-10.5) s'affiche, de manière à savoir si les modules électroniques (10.1-10.5) ont été insérés ou non dans l'emplacement de modules approprié.

9. Procédé selon la revendication 8, **caractérisé en ce que** par une activation automatique des unités d'éclairage, il s'affiche si les positions de commutateur rotatif du commutateur rotatif (11.1-11.9) des modules électroniques (10.1-10.5) sont paramétrées correctement ou non.

10. Procédé selon l'une quelconque des revendications 1 à 9, **caractérisé en ce que** les numéros de série des modules électroniques (10.1-10.5) sont lus et son enregistrés dans un moyen de stockage non volatil du calculateur (101) ou dans une base de données de configuration (103).
